# EUROPÄISCHE PATENTSCHRIFT

(11) **EP 1 396 072 B1**
(45) Veröffentlichungstag und Bekanntmachung des Hinweises auf die Patenterteilung: **07.04.2010**
(21) Anmeldenummer: 02727142.8
(22) Anmeldetag: 23.05.2002
(51) Int. Cl.: H02M 7/48, H02J 9/06

(54) **STROMRICHTER SYNCHRONISATION**
POWER CONVERTER SYNCHRONIZATION
SYNCHRONISATION DE CONVERTISSEUR DE COURANT

(30) Priorität: 31.05.2001 CH 996012001
(43) Veröffentlichungstag der Anmeldung: 10.03.2004
(73) Patentinhaber: DET International Holding Limited, George Town, Grand Cayman (KY)
(72) Erfinder: KELLER, Markus, CH-3014 Bern (CH)
(74) Vertreter: Roshardt, Werner Alfred
(86) Internationale Anmeldenummer: PCT/CH2002/000275
(87) Internationale Veröffentlichungsnummer: WO 2002/097959

(56) Entgegenhaltungen:
- DE-A- 19 604 207
- US-A- 4 328 429
- US-A- 5 237 208

## Beschreibung

### Technisches Gebiet

Die Erfindung betrifft ein Verfahren zur Synchronisation einer Ausgangswechselspannung eines Stromrichters auf eine externe Wechselspannung sowie einen Stromrichter zur Durchführung dieses Verfahrens.

### Stand der Technik

Zur Speisung eines Verbrauchers oder mehrerer Verbraucher werden häufig Stromrichter eingesetzt, welche eine bestimmte Eingangsspannung in die zur Speisung des Verbrauchers benötigte Ausgangsspannung umwandeln. Wird eine Wechselspannung benötigt, wird entweder ein Wechselrichter (Umwandlung einer Gleichspannung in eine Wechselspannung der gewünschten Frequenz und Amplitude) oder ein Wechselumrichter (Umwandlung einer Wechselspannung einer ersten Frequenz und Amplitude in eine Wechselspannung der gewünschten Frequenz und Amplitude) verwendet.

Werden mehrere Stromrichter mit einem Wechselspannungsausgang (Wechselrichter bzw. Wechselumrichter) parallel geschaltet, beispielsweise zwecks Redundanz, können Probleme entstehen, wenn sie nicht genau synchron laufen, d. h. wenn sie nicht in Phase und Frequenz präzise synchronisiert sind. Ein weiteres Problem entsteht dann, wenn eine an einem Stromversorgungsnetz angeschlossene Last beispielsweise bei einem Netzfehler an einen Wechselrichter umgeschaltet werden soll. Auch hier muss die Ausgangsspannung des Wechselrichters sehr genau mit der Netzspannung synchronisiert sein, damit beim Umschalten keine Phasensprünge auftreten.

Ein Ansatz zur Lösung dieser Probleme ist in der DE 196 04 207 beschrieben. Synchron zur Ausgangsspannung eines Wechselrichters wird von diesem ein Rechtecksignal generiert und an eine an das Stromnetz angeschlossene Steuerung übermittelt. Die Steuerung detektiert den Phasenunterschied zwischen dem Wechselsignal des Wechselrichters und jenem des Netzes und übermittelt diesen Phasenunterschied zurück an den Wechselrichter. Dieser synchronisiert sich daraufhin auf die Netzspannung, indem er seine eigenen Abtastzeiten entsprechend dem Phasenunterschied korrigiert. Indem der Master seine Abtastzeiten an weitere, parallel geschaltete Wechselrichter übermittelt, können diese ebenfalls auf die Netzspannung synchronisiert werden.

Das beschriebene Verfahren ist aufwändig und umständlich. Die Steuerung muss kompliziert ausgebildet sein. Sie muss nicht nur im richtigen Moment die Umschaltung vom Netz auf die Wechselrichter vornehmen, sondern auch das Netzsignal abtasten, das vom Wechselrichter gelieferte Rechtecksignal empfangen, dieses mit dem Netzsignal vergleichen und ein entsprechendes Differenzsignal generieren sowie an den Master zurücksenden. Zur Synchronisation ist darüber hinaus die Übermittlung mehrerer unterschiedlicher Signale notwendig. Damit sich beispielsweise ein Slave-Wechselrichter synchronisieren kann, muss zuerst ein Signal vom Master an die Steuerung übermittelt, dort verarbeitet, ein weiteres Signal von der Steuerung zum Master und ein drittes Signal vom Master zum Slave übermittelt werden. Zusätzlich benötigt auch ein Slave-Wechselrichter das Rechtecksignal des Masters, damit die Ausgangsspannungen nicht auseinander driften. Entsprechend aufwändig und langsam ist die Synchronisation.

### Darstellung der Erfindung

Aufgabe der Erfindung ist es, ein Verfahren der eingangs genannten Art anzugeben, welches die Nachteile des Standes der Technik vermeidet und insbesondere eine einfache Möglichkeit bietet, die Ausgangsspannungen mehrerer Wechselrichter miteinander bzw. mit einer externen Netzspannung zu synchronisieren.

Die Lösung der Aufgabe ist durch die Merkmale des Anspruchs 1 definiert. Bei dem erfindungsgemässen Verfahren zur Synchronisation einer Ausgangswechselspannung eines Stromrichters auf eine externe Wechselspannung wird die Ausgangswechselspannung des Stromrichters auf ein Synchronisationssignal synchronisiert. Dieses Synchronisationssignal wird entweder von einem externen Gerät generiert, an den Stromrichter übermittelt und von diesem empfangen, oder es wird vom Stromrichter selber generiert. D. h. der Stromrichter kann zwischen einem Empfangsmodus, in welchem er das extern generierte Synchronisationssignal empfängt, und einem Sendemodus, in welchem er das Synchronisationssignal selber generiert, hin und her wechseln, wobei er vom Empfangs- in den Sendemodus wechselt bzw. im Sendemodus bleibt, wenn er kein Synchronisationssignal empfängt und vom Sende- in den Empfangsmodus wechselt bzw. im Empfangsmodus bleibt, wenn er ein Synchronisationssignal empfangen kann.

Zum Empfangen des Synchronisationssignals sind der Stromrichter und das externe Gerät über einen Synchronisationsbus, an welchen der Stromrichter via eine Synchronisationsschnittstelle angeschlossen ist, miteinander verbunden.

Auf diese Weise ist es möglich, mit einem einzigen Synchronisationssignal die Ausgangswechselspannung eines Stromrichters auf eine externe Wechselspannung zu synchronisieren, egal, ob es sich bei der Wechselspannung um eine Ausgangsspannung eines anderen Stromrichters oder um eine Netzspannung eines Stromnetzes handelt.

Der Stromrichter kann quasi unabhängig von anderen Geräten betrieben werden. D. h. er versucht, über den Synchronisationsbus ein Synchronisationssignal zu empfangen, und wenn ihm dies gelingt, synchronisiert er sein Ausgangssignal auf das empfangene Synchronisationssignal. Kann er kein Synchronisationssignal empfangen, generiert er selber eines, synchronisiert sein Ausgangssignal auf das selber generierte Synchronisationssignal und kümmert sich nicht um das externe Gerät.

Vorzugsweise ist der Stromrichter jedoch derart ausgebildet, dass er das im Sendemodus selber generierte Synchronisationssignal über die Synchronisationsschnittstelle auf den Synchronisationsbus und damit zum externen Gerät sendet.

Wie bereits erwähnt, kann der Stromrichter als stand-alone Gerät konzipiert sein und die Bedienung kann beispielsweise über lokale Bedienelemente wie etwa ein Terminal erfolgen. In diesem Fall verfügt der Stromrichter ausser dem Anschluss an den Synchronisationsbus über keinerlei Kommunikationsverbindungen zur Aussenwelt. Um jedoch die Bedienung des Stromrichters möglichst zu vereinfachen, verfügt der Stromrichter bevorzugt über eine Kommunikationsschnittstelle. Diese dient nicht nur zur Kommunikation mit anderen Geräten wie dem externen Gerät, sondern beispielsweise auch zur Fernbedienung oder Überwachung des Stromrichters durch eine Kontrollinstanz.

Für einen korrekten Betrieb des Stromrichters reichen die beiden erwähnten Betriebsmodi im Grunde aus. Mit Vorteil ist neben dem Empfangs- und dem Sendemodus jedoch noch ein weiterer Betriebsmodus vorgesehen. So wechselt der Stromrichter nach dem Einschalten beispielsweise nicht direkt in den Empfangs - oder den Sendemodus, sondern er wechselt zunächst in einen Wartemodus. In den Wartemodus wechselt der Stromrichter auch nach einem Kommunikationsverlust mit dem externen Gerät.

Der Wartemodus ermöglicht es, bei Störungen irgendwelcher Art den Stromrichter wieder in einen definierten Zustand zu bringen. Vom Wartemodus aus kann der Stromrichter dann wieder in einen der beiden anderen Betriebsmodi gelangen.

In welchen Betriebsmodus der Stromrichter wechselt, ist im Prinzip egal. Allerdings ergeben sich gewisse Vorteile, wenn der Stromrichter nach einem erfolgreichen Kommunikationsaufbau mit dem externen Gerät zunächst in den Empfangsmodus wechselt und versucht, über den Synchronisationsbus ein Synchronisationssignal zu empfangen. Würde er direkt nach dem Einschaltvorgang in den Sendemodus wechseln, könnte es passieren, dass er ein Synchronisationssignal auf den Synchronisationsbus sendet, obwohl bereits ein korrektes Synchronisationssignal eines anderen Gerätes vorhanden ist. Dies könnte bewirken, dass ein bereits synchronisiertes System gestört wird.

Geht der Stromrichter zunächst jedoch auf Empfang, wird ein stabiles System nicht gestört und der neu hinzugekommene Stromrichter kann problemlos auf das vorhandene Synchronisationssignal aufsynchronisieren. Erst wenn er nach einer bestimmten Zeit noch kein Synchronisationssignal empfangen konnte, wechselt er schliesslich in den Sendemodus und sendet ein eigenes Synchronisationssignal aus, auf welches sich wiederum andere, später aufgeschaltete Stromrichter synchronisieren können.

Das Gleiche gilt auch, wenn der Stromrichter nicht mehr mit dem externen Gerät kommunizieren kann. Würde er vom Wartemodus direkt in den Sendemodus wechseln, könnte er ein mittlerweile wieder synchronisiertes System gleich wieder aus dem Gleichgewicht bringen.

Von wo das Synchronisationssignal auf dem Synchronisationsbus stammt, ist belanglos. Allerdings gibt es zwei bevorzugte Systemkonfigurationen, in denen die Erfindung zur Anwendung gelangt.

Bei der einen Konfiguration ist neben dem ersten Stromrichter zumindest ein zweiter, parallel geschalteter Stromrichter vorhanden, der die externe Wechselspannung liefert, auf welche die Ausgangswechselspannung des ersten Stromrichters synchronisiert werden muss. Dieser andere Stromrichter ist, was die Synchronisation betrifft, gleichartig mit dem ersten Stromrichter. D. h. werden beide gleichzeitig eingeschaltet, gehen zunächst beide in den Warte- und anschliessend in den Empfangsmodus. Einer der beiden wird schliesslich zuerst in den Sendemodus wechseln und ein Synchronisationssignal aussenden, auf welches sich der andere dann synchronisieren wird. Ist hingegen bereits einer der Stromrichter in Betrieb und der andere kommt neu hinzu, wird der letztere in den Empfangsmodus wechseln, um das Synchronisationssignal des anderen, der sich im Sendemodus befindet, zu empfangen und sich darauf zu synchronisieren.

Dieses Prinzip lässt sich problemlos auf eine Vielzahl von parallel geschalteten Stromrichtern erweitern, wobei es durchaus vorkommen kann, dass sich mehrere Stromrichter gleichzeitig im Sendemodus befinden. Dies kann dann geschehen, wenn die von unterschiedlichen Stromrichtern generierten Synchronisationssignale zeitlich derart präzise übereinstimmen, dass sie nicht mehr unterschieden werden können. Wenn nun die Frequenz zweier Synchronisationssignale nicht ganz übereinstimmt, driften die beiden Signale auseinander, bis irgendwann einer der Stromrichter feststellen kann, dass ein anderes Synchronisationssignal vorhanden ist. In diesem Moment wechselt dieser Stromrichter in den Empfangsmodus.

Bei der anderen bevorzugten Konfiguration handelt es sich bei der externen Wechselspannung um die Netzspannung eines Stromversorgungsnetzes, an welches zur Speisung eine beliebige Last angeschlossen ist. Für den Fall, dass das Stromversorgungsnetz ausfällt, ist ein Stromrichter vorgesehen, wobei die Verbindung von der Last zum Stromversorgungsnetz im Fehlerfall sofort unterbrochen und die Last zur Speisung unverzüglich an den Stromrichter angeschlossen wird, damit keine Speisungsunterbrüche entstehen.

Die Umschaltung erfolgt durch eine Schaltvorrichtung, die über zwei Stromeingänge und einen Stromausgang verfügt. Auf den ersten Stromeingang ist das Stromversorgungssignal des Stromnetzes und auf den zweiten Stromeingang die Ausgangswechselspannung des Stromrichters geführt. Die Last wird am Stromausgang angeschlossen. Typischerweise ist das Netzsignal vom ersten Stromeingang auf den Stromausgang der Schaltvorrichtung geschaltet. Im Fehlerfall, beispielsweise bei einem Stromausfall des Netzes, wird jedoch der zweite Stromeingang der Schaltvorrichtung auf deren Stromausgang geschaltet und vom Stromrichter mit elektrischer Energie versorgt. Mit anderen Worten: In Abhängigkeit eines an einem der Stromeingänge anliegenden Speisungsignals wird entweder der erste oder der zweite Stromeingang mit dem Stromausgang verbunden.

Um zu gewährleisten, dass beim Umschalten keine Probleme entstehen, muss sichergestellt sein, dass das Netzsignal und das Ausgangssignal des Stromrichters sowohl in der Frequenz als auch in der Phase präzise synchronisiert sind.

Diese Synchronisation wird erreicht, indem die Schaltvorrichtung mit entsprechenden Mitteln ein Synchronisationssignal generiert und es auf den Synchronisationsbus aussendet. D. h. die Schaltvorrichtung leitet das Synchronisationssignal entweder aus dem Speisungssignal ab oder sie erzeugt es unabhängig vom Netzsignal, beispielsweise, wenn das Netzsignal ausfällt oder wenn es ausserhalb der erlaubten Toleranz liegt. Zum Aussenden des Synchronisationssignals verfügt die Schaltvorrichtung über ein Sendemodul, welches das Synchronisationssignal über eine Synchronisationsschnittstelle auf den Synchronisationsbus ausgibt. Auf dieses Synchronisationssignal kann sich der Stromrichter dann synchronisieren. Die Schaltvorrichtung kennt im Gegensatz zum Stromrichter jedoch keinen Empfangsmodus. Sie wird also, sobald sie am Netz angeschlossen ist, ein Synchronisationssignal generieren und aussenden. Damit ist gewährleistet, dass der Stromrichter nicht versucht, seinerseits ein Synchronisationssignal zu senden. Solange die Schaltvorrichtung ihr Synchronisationssignal aussendet bzw. dieses vom Stromrichter empfangen wird, wird der Stromrichter im Empfangsmodus verbleiben bzw, in diesen wechseln.

Bei einem Ausfall der Schaltvorrichtung fällt das von ihr generierte Synchronisationssignal weg. Gemäss der Erfindung wechselt in diesem Moment jedoch mindestens einer der Stromrichter in den Sendemodus und sendet ein selber generiertes Synchronisationssignal aus. D. h. die Stromrichter bleiben auch bei einem Ausfall der Schaltvorrichtung untereinander synchronisiert. Lediglich die Synchronisation mit dem Netzsignal ist in diesem Fall nicht mehr gewährleistet.

Die Schaltvorrichtung kann also wahlweise die Netzspannung oder die Ausgangswechselspannung des Stromrichters auf ihren Stromausgang schalten. Das Umschalten kann aber nicht nur im Fehlerfall der Netzspannung geschehen, sondern beispielsweise auch zu Test- oder Wartungszwecken.

Selbstverständlich können auch bei dieser Konfiguration mehrere Stromrichter parallel geschaltet werden, wobei sämtliche Stromrichter zur Synchronisation ihrer Ausgangsspannungen mit der Netzspannung das Synchronisationssignal der Schaltvorrichtung verwenden.

Wie zu Beginn bereits erwähnt, gibt es verschiedene Arten von Stromrichtern zur Erzeugung einer Ausgangswechselspannung: Wechselrichter und Wechselumrichter. D. h. der Stromrichter kann grundsätzlich von einer Gleich- oder eine Wechselspannung gespiesen werden.

Bei einer bevorzugten Ausführungsform der Erfindung handelt es sich bei den Stromrichtern allerdings um Wechselrichter, welche von einer Gleichspannungsquelle, beispielsweise einer Batterie oder einem Akkumulator gespiesen werden und diese Gleichspannung jeweils in eine Wechselspannung einer gewünschten Frequenz, Amplitude und Phase umwandeln. Wechselrichter mit einer Akkumulatorspeisung werden nämlich häufig eingesetzt, um bei wichtigen Verbrauchern auch bei einem Netzausfall einen unterbruchsfreien Betrieb zu gewährleisten.

Zum Generieren des Synchronisationssignals verfügt der Stromrichter über entsprechende Mittel, beispielsweise über einen quarzgesteuerten Oszillator. Weiter weist er eine Synchronisationsschnittstelle sowie Mittel zum Senden bzw. Empfangen des Synchronisationssignals über die Synchronisationsschnittstelle wie etwa ein Sende-/Empfangsmodul auf. Eine Steuerung sorgt für das korrekte Wechseln von einem Betriebsmodus in den anderen. Zur Synchronisation der Ausgangswechselspannung des Stromrichters auf das Synchronisationssignals sind zudem Mittel vorgesehen, mit welchen die Frequenz und die Phase des Ausgangssignals beeinflusst werden kann. Jedes dieser Mittel kann sowohl einzeln, in beliebiger Kombination oder auch als gemeinsame physikalische Einheit implementiert sein.

Die Schaltvorrichtung bzw. eine entsprechende Schaltungsanordnung kann auch mehr als zwei Stromeingänge aufweisen, wobei sie über Schaltmittel zum wahlweisen Verbinden eines der Stromeingänge mit dem Stromausgang verfügt. Welcher Stromeingang mit dem Stromausgang verbunden wird, hängt ab von einem Speisungssignal, das an einem der Stromeingänge anliegt. Zum Generieren des Synchronisationssignals verfügt die Schaltvorrichtung ebenfalls über entsprechende Mittel, beispielsweise über einen quarzgesteuerten Oszillator. Diese sind derart ausgebildet, dass das Synchronisationssignal entweder aus dem Speisungssignal abgeleitet oder unabhängig davon generiert werden kann. Weiter weist sie eine Synchronisationsschnittstelle sowie Mittel zum Senden des Synchronisationssignals über die Synchronisationsschnittstelle wie beispielsweise ein Sendemodul auf.

Auch diese Mittel können sowohl einzeln, in beliebiger Kombination oder als gemeinsame physikalische Einheit implementiert sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein schematisch dargestelltes System zur Speisung einer Last aus einem Stromversorgungsnetz oder mittels einer Mehrzahl von Stromrichtern;
- Fig. 2: ein Zustandsübergangsdiagramm eines erfindungsgemässen Stromrichters und
- Fig. 3: ein Zustandsübergangsdiagramm einer erfindungsgemässen Schaltvorrichtung.

Grundsätzlich sind in den Figuren gleiche Teile mit gleichen Bezugszeichen versehen.

### Wege zur Ausführung der Erfindung

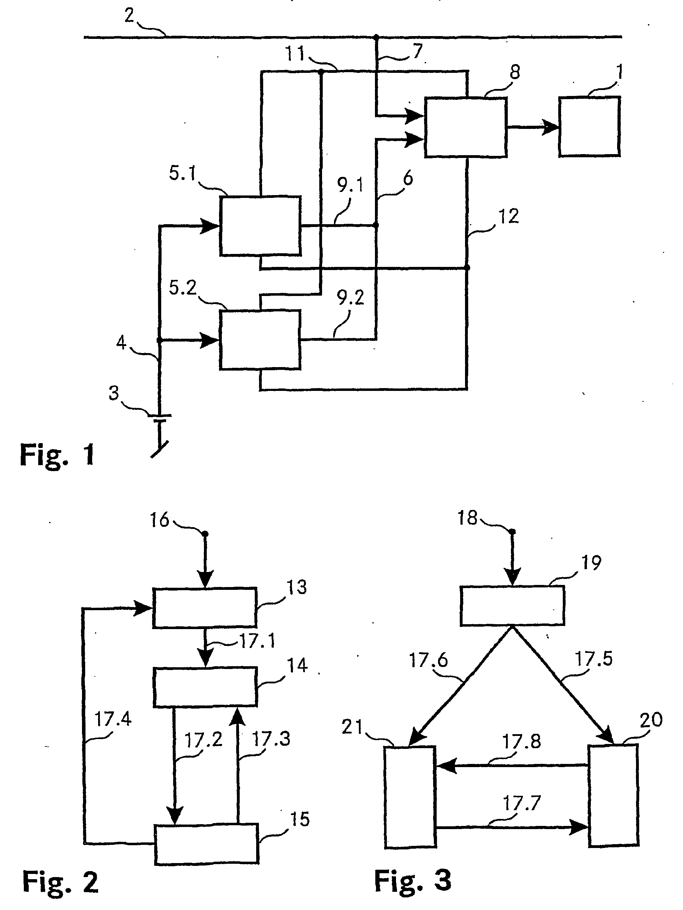

Figur 1 zeigt ein System zur Speisung einer Last 1. Die Speisung erfolgt entweder mit Energie aus einem Stromversorgungsnetz 2 oder mit Energie aus einer Batterie 3. Die Batterie 3 liefert einen Gleichstrom 4 bestimmter Grösse, welcher mittels zweier parallel geschalteter Wechselrichter 5.1 und 5.2 in eine Wechselspannung 6 der benötigten Frequenz und Amplitude umgewandelt wird. Diese Wechselspannung 6 entspricht der Netzspannung 7 des Stromversorgungsnetzes 2. Hierbei handelt es sich beispielsweise um eine übliche ein- oder dreiphasige Versorgungsspannung von 230 V bzw. 400 V Wechselspannung mit einer Frequenz von 50 Hz. Selbstverständlich können das Stromversorgungsnetz 2 bzw. die Wechselrichter 5.1, 5.2 auch für andere Spannungen und Frequenzen ausgelegt sein.

Im Normalfall wird die Last 1 aus dem Stromversorgungsnetz 2 gespiesen. Zu diesem Zweck ist eine Schaltvorrichtung 8 vorgesehen, die die entsprechenden Verbindungen zwischen dem Stromversorgungsnetz 2 und der Last 1 herstellt. Diese Verbindungen umfassen beispielsweise die Verbindungen für eine Phase, den Nulleiter sowie einen Erdleiter für eine Einphasen-Wechselspannung sowie zwei zusätzliche Verbindungen für die beiden zusätzlichen Phasen bei einer Dreiphasen-Wechselspannung.

Fällt die Netzspannung 7 aus oder überschreitet sie vorgegebene Toleranzwerte, reagiert die Schaltvorrichtung 8 unverzüglich und schaltet die Last 1 von der Netzspannung 7 auf die Wechselspannung 6 der Wechselrichter 5.1, 5.2 um.

Damit dieser Umschaltvorgang problemlos durchgeführt werden kann, muss die Wechselspannung 6 präzise mit der Netzspannung 7 synchronisiert sein. D. h. deren Frequenzen und vor allem deren Phasenlage müssen sehr präzise übereinstimmen. Aber nicht nur die Wechselspannung 6 und die Netzspannung 7 müssen synchronisiert sein, auch die von den beiden Wechselrichtern 5.1, 5.2 gelieferten Ausgangsspannungen 9.1, 9.2 müssen in Phase und Frequenz übereinstimmen. Sind die Ausgangsspannungen 9.1, 9.2 nicht synchron, ist die Strombelastung der beiden Wechselrichter 5.1, 5.2 nicht symmetrisch, was unerwünscht ist.

Zur Synchronisation der Netzspannung 7 und der beiden Ausgangsspannungen 9.1 und 9.2 sind die Schaltvorrichtung 8 und die beiden Wechselrichter 5.1, 5.2 jeweils über eine Synchronisationsschnittstelle an einen Synchronisationsbus 11 angeschlossen. Auf diesem Synchronisationsbus 11 wird ein Synchronisationssignal übertragen, das von der Schaltvorrichtung 8 erzeugt und auf den Synchronisationsbus 11 ausgesendet wird. Wenn die Schaltvorrichtung 8 auf dem Stromversorgungsnetz 2 eine korrekte Netzspannung 7 detektieren kann, leitet es das Synchronisationssignal aus der Netzspannung 7 ab. Kann es keine korrekte Netzspannung 7 feststellen, generiert es das Synchronisationssignal unabhängig davon. Die Wechselrichter 5.1, 5.2 empfangen dieses Synchronisationssignal und synchronisieren sich darauf.

Beim Synchronisationssignal kann es sich sowohl um ein analoges als auch um ein digitales Signal handeln. Es besteht beispielsweise aus einem oder einer Mehrzahl von Spannungspulsen pro Schwingungsperiode des zu erzeugenden Wechselspannungssignals. Die Detektion des Synchronisationssignals erfolgt beispielsweise mit einer Auflösung von etwa 400 ns. D. h. liegen die Pulse zweier Synchronisationssignale zumindest 400 ns auseinander, können sie voneinander unterschieden werden. Oder umgekehrt formuliert: Stimmen die Synchronisationssignale der beiden Wechselrichter 5.1, 5.2 bis auf maximal 400 ns überein, können sich beide im Sendemodus befinden.

Zur gegenseitigen Kommunikation sind die Wechselrichter 5.1, 5.2 und die Schaltvorrichtung 8 an ein Kommunikationsnetz 12 angeschlossen, über welches sie beispielsweise Daten austauschen oder kontrolliert und fernbedient werden können. Typischerweise händelt es sich beim Synchronisationsbus 11 und dem Kommunikationsnetz 12 um unterschiedliche Hardware. Allerdings könnte das System auch derart ausgebildet sein, dass die Synchronisationssignale ebenfalls auf dem Kommunikationsnetz 12 übertragen werden können.

Ist, wie in Figur 1 dargestellt, eine Schaltvorrichtung 8 vorhanden, die die Last 1 entweder mit dem Stromversorgungsnetz 2 oder mit den Wechselrichtern 5.1, 5.2 verbindet, wird das Synchronisationssignal immer von der Schaltvorrichtung 8 generiert und beide welchselrichter 5.1, 5.2 wechseln in den Empfangsmodus und synchronisieren sich auf dieses Synchronisationssignal.

Ist die Last 1 jedoch direkt an die Wechselrichter 5.1, 5.2 angeschlossen, d. h. ist keine Schaltvorrichtung 8 vorhanden, wechselt einer der beiden Wechselrichter 5.1, 5.2 in den Sendemodus, generiert selber ein Synchronisationssignal und sendet dieses auf den Synchronisationsbus 11. Der jeweils andere Wechselrichter 5.2, 5.1 kann dann wieder ein Synchronisationssignal empfangen, wechselt in den Empfangsmodus bzw. verbleibt darin und synchronisiert sich darauf.

Anhand der Figur 2 werden nachfolgend die Vorgänge bei der Synchronisation eines Wechselrichters 5.1 erläutert. Figur 2 zeigt hierzu beispielhaft das Zustandsübergangsdiagramm des Wechselrichters 5.1 mit den drei Zuständen Wartemodus 13, Empfangsmodus 14 und Sendemodus 15.

Nach dem Einschaltvorgang 16 geht der Wechselrichter 5.1 in den Wartemodus 13 über. Im Wartemodus 13 versucht er, eine Kommunikation mit einem anderen Gerät, d. h. der Schaltvorrichtung 8 oder dem anderen Wechselrichter 5.2 aufzubauen. Gelingt ihm dies, wechselt er in den Empfangsmodus 14, angedeutet durch den Pfeil 17.1. Im Empfangsmodus 14 versucht der Wechselrichter 5.1, über seine Synchronisationsschnittstelle ein Synchronisationssignal zu empfangen. Kann er ein Synchronisationssignal empfangen, verbleibt er im Empfangsmodus und synchronisiert seine Ausgangsspannung 9.1 auf das Synchronisationssignal. Dies erfolgt beispielsweise mit einem sogenannten PLL (Phase Locked Loop) oder einer anderen bekannten Methode.

Kann er hingegen kein Synchronisationssignal empfangen, wechselt er in den Sendemodus 15, angedeutet durch den Pfeil 17.2. Im Sendemodus 15 generiert der Wechselrichter 5.1 sein eigenes Synchronisationssignal, auf welches er seine Ausgangsspannung 9.1 synchronisiert und welches er auf den Synchronisationsbus 11 aussendet. Nach dem Moduswechsel behält der Wechselrichter 5.1 für eine bestimmte Zeit, beispielsweise für etwa 300 ms, die Frequenz seiner Ausgangsspannung 9.1 aus dem Empfangsmodus bei. Erst danach beginnt er, das Synchronisationssignal derart zu verändern, dass sich die Frequenz seiner Ausgangsspannung 9.1 der Sollfrequenz, beispielsweise 50 Hz annähert. Zum Generieren seines Synchronisationssignals verfügt der Wechselrichter 5.1 über eine sehr präzise Zeitbasis, beispielsweise einen quarzgesteuerten Oszillator.

Während sich der Wechselrichter 5.1 im Sendemodus 15 befindet, prüft er fortwährend, ob er ein Synchronisationssignal über den Synchronisationsbus 11 empfangen kann. Sobald er ein anderes Synchronisationssignal empfangen kann, wechselt er gemäss dem Pfeil 17.3 zurück in den Empfangsmodus 14 und synchronisiert seine Ausgangsspannung 9.1 auf das empfangene Synchronisationssignal.

Verliert der Wechselrichter 5.1 im Sendemodus 15 allerdings die Kommunikationsverbindung zum Wechselrichter 5.2 und zur Schaltvorrichtung 8, wechselt er gemäss dem Pfeil 17.4 nach einer vordefinierten Wartezeit von beispielsweise 300 ms in den Wartemodus 13. Kann hingegen die Kommunikation zu einem Gerät innerhalb dieser Wartezeit wieder hergestellt werden, verbleibt der Wechselrichter 5.1 im Sendemodus.

Beide Wechselrichter 5.1, 5.2 sind bezüglich ihrer Funktionalität identisch ausgebildet. D. h. auch der Wechselrichter 5.2 und allfällige weitere parallel geschaltete Wechselrichter weisen dasselbe Zustandsübergangsdiagramm gemäss Figur 2 auf.

In Figur 3 ist das Zustandsübergangsdiagramm der Schaltvorrichtung 8 dargestellt. Nach dem Einschaltvorgang 18 führt die Schaltvorrichtung 8 zunächst eine Netzprüfung .19 durch, wo es kontrolliert, ob das Stromversorgungsnetz 2 eine korrekte Netzspannung 7 führt. Stellt es eine korrekte Netzspannung 7 fest, wechselt die Schaltvorrichtung 8 gemäss Pfeil 17.5 in einen Synchronsendemodus 20, in welchem es das Synchronisationssignal aus der Netzspannung 7 ableitet und auf den Synchronisationsbus 11 ausgibt.

Kann es keine korrekte Netzspannung 7 feststellen, d. h. ist diese nicht vorhanden oder befindet sie sich ausserhalb des möglichen Toleranzbandes, wechselt die Schaltvorrichtung 8 gemäss Pfeil 17.6 in den Asynchronsendemodus 21. In diesem Betriebsmodus generiert die Schaltvorrichtung 8 das Synchronisationssignal unabhängig von der Netzspannung 7 mit Hilfe eines internen Zeitgebers, beispielsweise einem quarzgesteuerten Oszillator.

Im Betrieb prüft die Schaltvorrichtung 8 fortwährend die Netzspannung 7. Befindet sich die Schaltvorrichtung 8 im Asynchronsendemodus 21 und es stellt eine korrekte Netzspannung 7 fest, wechselt es gemäss Pfeil 17.7 umgehend in den Synchronsendemodus 20. Umgekehrt wechselt die Schaltvorrichtung 8 gemäss Pfeil 17.8 umgehend vom Synchronsendemodus 20 in den Asynchronsendemodus 21, wenn es keine korrekte Netzspannung 7 mehr detektieren kann. Als Toleranzband für die Frequenz der Netzspannung 7 mit einem Nennwert von beispielsweise 50 Hz kann etwa der Bereich von 47 Hz bis 53 Hz definiert werden.

Damit verbleibt die Schaltvorrichtung 8 entweder im Synchronsendemodus 20 oder im Asynchronsendemodus 21, bis sie entweder ausgeschaltet wird oder wegen eines Defekts ausfällt.

Zusammenfassend ist festzustellen, dass es die Erfindung ermöglicht, eine Mehrzahl von Stromrichtern sowohl untereinander als auch mit einer vorgegebenen Netzspannung zu synchronisieren, wobei die Synchronisation auch bei einem Ausfall eines oder mehrerer Geräte aufrechterhalten werden kann.

## Patentansprüche

1. Verfahren zur Synchronisation einer Ausgangswechselspannung (9.1) eines Stromrichters (5.1) auf eine externe Wechselspannung (9.2, 7), **dadurch gekennzeichnet, dass** vom Stromrichter in einem Empfangsmodus (14) ein von einem externen Gerät (5.2, 8) generiertes Synchronisationssignal empfangen oder in einem Sendemodus (15) selber ein Synchronisationssignal generiert wird und der Stromrichter die Ausgangswechselspannung auf das empfangene bzw. selber generierte Synchronisationssignal synchronisiert, wobei der Stromrichter vom Empfangsmodus in den Sendemodus wechselt, wenn er kein Synchronisationssignal empfängt bzw. vom Sendemodus in den Empfangsmodus wechselt, wenn er ein Synchronisationssignal empfängt.

2. Verfahren nach Anspruch 1, **dadurch gekennzeichnet, dass** der Stromrichter im Sendemodus das selber generierte Synchronisationssignal aussendet.

3. Verfahren nach Anspruch 1 oder 2, **dadurch gekennzeichnet, dass** der Stromrichter nebst dem Synchronsiationssignal Kommunikationssignale mit dem externen Gerät austauscht.

4. Verfahren nach Anspruch 3, **dadurch gekennzeichnet, dass** der Stromrichter nach einem Einschaltvorgang (16) oder nach einem Kommunikationsverlust mit dem externen Gerät in einen Wartemodus (13) wechselt.

5. Verfahren nach Anspruch 4, **dadurch gekennzeichnet, dass** der Stromrichter nach einem erfolgreichen Kommunikationsaufbau mit dem externen Gerät vom Wartemodus in den Empfangsmodus wechselt.

6. Verfahren nach einem der Ansprüche 1. bis 5, **dadurch gekennzeichnet, dass** die externe Wechselspannung von einem zum ersten Stromrichter parallel geschalteten, weiteren Stromrichter (5.2) erzeugt wird und einer der Stromrichter in den Sendemodus wechselt.

7. Verfahren nach einem der Ansprüche 1 bis 6, **dadurch gekennzeichnet, dass** die Ausgangswechselspannung des Stromrichters auf eine Netzspannung (7) eines Stromversorgungsnetzes synchronisiert wird, wobei das Synchronisationssignal von einer am Stromversorgungsnetz angeschlossenen Schaltvorrichtung (8) generiert und an den Stromrichter übermittelt wird, der Stromrichter im Empfangsmodus ist oder in diesen wechselt und das Synchronisationssignal insbesondere entweder aus dem Netzsignal abgeleitet oder unabhängig vom Netzsignal erzeugt wird.

8. Verfahren nach Anspruch 7, **dadurch gekennzeichnet, dass** die Schaltvorrichtung wahlweise die Netzspannung oder die Ausgangswechselspannung des Stromrichters auf einen Stromausgang schaltet.

9. Verfahren nach einem der Ansprüche 1 bis 8, **dadurch gekennzeichnet, dass** der erste Stromrichter sowie allfällige weitere Stromrichter von einer Gleichspannungsquelle (3), insbesondere einer Batterie oder einem Akkumulator, gespiesen werden.

10. Stromrichter (5.1) zur Erzeugung einer Ausgangswechselspannung (9.1), umfassend eine Synchronisationsschnittstelle, **dadurch gekennzeichnet, dass** er erste Mittel aufweist zum Empfangen eines Synchronisationssignals über die Synchronisationsschnittstelle in einem Empfangsmodus, zweite Mittel zur Erzeugung eines Synchronisationssignals in einem Sendemodus, dritte Mittel zum Wechseln vom Empfangsmodus in den Sendemodus bzw. vom Sendemodus in den Empfangsmodus in Abhängigkeit einer Präsenz eines Synchronisationssignals an der Synchronisationsschnittstelle sowie vierte Mittel zur Synchronisation der Ausgangswechselspannung auf das Synchronisationssignal.

11. Stromrichter nach Anspruch 10, **dadurch gekennzeichnet, dass** er Mittel aufweist zur Aussendung des selber erzeugten Synchronisationssignals über die Synchronisationsschnittstelle.

12. Stromrichter nach Anspruch 10 oder 11, **dadurch gekennzeichnet, dass** er Mittel aufweist zur Kommunikation mit einem anderen Gerät.

13. Anordnung zur Speisung einer Last (1), umfassend zumindest einen Stromrichter (5.1) nach einem der Ansprüche 10 bis 12 sowie ein Stromversorgungsnetz (2), **dadurch gekennzeichnet, dass** die Anordnung eine Schaltungsanordnung (8) mit zumindest zwei Stromeingängen, einem Stromausgang sowie einer Synchronisationsschnittstelle umfasst, wobei die Ausgangswechselspannung (9.1) des zumindest einen Stromrichters (5.1) mit einem ersten Stromeingang der Schaltungsanordnung (8), eine Netzspannung des Stromversorgungsnetzes (2) mit einem zweiten Stromeingang der Schaltungsanordnung (8) und die Synchronisationsschnittstelle des zumindest einen Stromrichters (5.1) mit der Synchronisationsschnittstelle der Schaltungsanordnung verbunden ist und die Schaltungsanordnung (8) Schaltmittel zum wahlweisen Verbinden eines der Stromeingänge mit dem Stromausgang in Abhängigkeit eines an einem der Stromeingänge anliegenden Speisungssignales, Mittel zum Generieren eines Synchronisationssignales sowie Mittel zum Aussenden des Synchronisationssignales über die Synchronisationsschnittstelle umfasst, wobei die Mittel zum Generieren des Synchronisationssignales derart ausgebildet sind, dass das Synchronisationssignal sowohl aus dem Speisungssignal ableitbar als auch unabhängig davon generierbar ist.

## Claims

1. Method for synchronization of an output AC voltage (9.1) of a converter (5.1) to an external AC voltage (9.2, 7), **characterized in that**, in a receive mode (14), the converter receives a synchronization signal which is generated by an external appliance (5.2, 8) or, in a transmit mode (15), generates a synchronization signal itself, and the converter synchronizes the output AC voltage to the received or self-generated synchronization signal, wherein the converter changes from the receive mode to the transmit mode when it does not receive a synchronization signal, and changes from the transmit mode to the receive mode when it receives a synchronization signal.

2. Method according to Claim 1, **characterized in that** the converter transmits the self-generated synchronization signal in the transmit mode.

3. Method according to Claim 1 or 2, **characterized in that** in addition to the synchronization signal, the converter interchanges communication signals with the external appliance.

4. Method according to Claim 3, **characterized in that** the converter changes to a waiting mode (13) after a switching-on process (16) or after a loss of communication with the external appliance.

5. Method according to Claim 4, **characterized in that**, after communication has successfully been set up with the external appliance, the converter changes from the waiting mode to the receive mode.

6. Method according to one of Claims 1 to 5, **characterized in that** the external AC voltage is produced by a further converter (5.2) which is connected in parallel with the first converter, and one of the converters changes to the transmit mode.

7. Method according to one of Claims 1 to 6, **characterized in that** the output AC voltage of the converter is synchronized to a mains voltage (7) of an electricity supply system, wherein the synchronization signal is generated by a switching apparatus (8) connected to the electricity supply system and is transmitted to the converter, the converter is in the receive mode or changes to it, and the synchronization signal is, in particular, either derived from the mains signal or is produced independently of the mains signal.

8. Method according to Claim 7, **characterized in that** the switching apparatus selectively connects the mains voltage or the output AC voltage from the converter to a current output.

9. Method according to one of Claims 1 to 8, **characterized in that** the first converter and any further converters are fed from a DC voltage source (3) in particular a battery or a rechargeable battery.

10. Converter (5.1) for producing an output AC voltage (9.1), comprising a synchronization interface, **characterized in that** the converter (5.1) has first means for receiving a synchronization signal via the synchronization interface in a receive mode, second means for producing a synchronization signal in a transmit mode, third means for changing from the receive mode to the transmit mode and from the transmit mode to the receive mode as a function of the presence of a synchronization signal at the synchronization interface, and fourth means for synchronizing the output AC voltage to the synchronization signal.

11. Converter according to Claim 10, **characterized in that** the converter has means for transmitting the self-produced synchronization signal via the synchronization interface.

12. Converter according to Claim 10 or 11, **characterized in that** the converter has means for communicating with another appliance.

13. Arrangement for feeding a load (1), comprising at least one converter (5.1) according to one of Claims 10 to 12, as well as an electricity supply system (2), **characterized in that** the arrangement comprises a circuit arrangement (8) having at least two current inputs, one current output and a synchronization interface, wherein the output AC voltage (9.1) of the at least one converter (5.1) is connected to a first current input of the circuit arrangement (8), a mains voltage of the electricity supply system (2) is connected to a second current input of the circuit arrangement (8), and the synchronization interface of the at least one converter (5.1) is connected to the synchronization interface of the circuit arrangement, and the circuit arrangement (8) comprises switching means for selective connection of one of the current inputs to the current output as a function of a feed signal which is applied to one of the current inputs, means for generating a synchronization signal, and means for transmitting the synchronization signal via the synchronization interface, wherein the means for generating the synchronization signal are designed such that the synchronization signal can both be derived from the feed signal and can be generated independently of it.

## Revendications

1. Procédé de synchronisation d'une tension alternative de sortie (9.1) d'un convertisseur statique (5.1) sur une tension alternative externe (9.2, 7), **caractérisé en ce qu'**un signal de synchronisation généré par un appareil externe (5.2, 8) est reçu par le convertisseur statique dans un mode de réception (14) ou un signal de synchronisation est généré par lui-même dans un mode d'émission (15) et le convertisseur statique synchronise la tension alternative de sortie sur le signal de synchronisation reçu ou généré par lui-même, le convertisseur statique basculant du mode de réception au mode d'émission lorsqu'il ne reçoit pas de signal de synchronisation ou basculant du mode d'émission au mode de réception lorsqu'il reçoit un signal de synchronisation.

2. Procédé selon la revendication 1, **caractérisé en ce que** le convertisseur statique en mode émission émet le signal de synchronisation généré par lui-même.

3. Procédé selon la revendication 1 ou 2, **caractérisé en ce que** le convertisseur statique, en plus du signal de synchronisation, échange également des signaux de communication avec l'appareil externe.

4. Procédé selon la revendication 3, **caractérisé en ce que** le convertisseur statique, après une opération de mise sous tension (16) ou après une perte de communication avec l'appareil externe, bascule dans un mode d'attente (13).

5. Procédé selon la revendication 4, **caractérisé en ce que** le convertisseur statique, après avoir réussi à établir une communication avec l'appareil externe, bascule du mode d'attente au mode de réception.

6. Procédé selon l'une des revendications 1 à 5, **caractérisé en ce que** la tension alternative externe est générée par un convertisseur statique supplémentaire (5.2) branché en parallèle avec le premier convertisseur statique et l'un des convertisseurs statiques bascule en mode d'émission.

7. Procédé selon l'une des revendications 1 à 6, **caractérisé en ce que** la tension alternative de sortie du convertisseur statique est synchronisée sur une tension de réseau (7) d'un réseau d'alimentation électrique, le signal de synchronisation étant généré par un dispositif de commutation (8) raccordé au réseau d'alimentation électrique et communiqué au convertisseur statique, le convertisseur statique se trouvant en mode de réception ou basculant dans celui-ci et le signal de synchronisation étant notamment soit dérivé du signal de réseau, soit généré indépendamment du signal de réseau.

8. Procédé selon la revendication 7, **caractérisé en ce que** le dispositif de commutation commute, au choix, la tension de réseau ou la tension alternative de sortie du convertisseur statique sur une sortie de courant.

9. Procédé selon l'une des revendications 1 à 8, **caractérisé en ce que** le premier convertisseur statique ainsi que les éventuels convertisseurs statiques supplémentaires sont alimentés par une source de tension continue (3), notamment une pile ou un accumulateur.

10. Convertisseur statique (5.1) destiné à générer une tension alternative de sortie (9.1), comprenant une interface de synchronisation, **caractérisé en ce qu'**il présente des premiers moyens pour recevoir un signal de synchronisation par le biais de l'interface de synchronisation dans un mode de réception, des deuxièmes moyens pour générer un signal de synchronisation dans un mode d'émission, des troisièmes moyens pour basculer du mode de réception dans le mode d'émission ou du mode d'émission dans le mode de réception en fonction de la présence d'un signal de synchronisation sur l'interface de synchronisation ainsi que des quatrièmes moyens pour synchroniser la tension alternative de sortie sur le signal de synchronisation.

11. Convertisseur statique selon la revendication 10, **caractérisé en ce qu'**il présente des moyens pour émettre le signal de synchronisation généré par lui-même par le biais de l'interface de synchronisation.

12. Convertisseur statique selon la revendication 10 ou 11, **caractérisé en ce qu'**il présente des moyens pour communiquer avec un autre appareil.

13. Arrangement d'alimentation d'une charge (1), comprenant au moins un convertisseur statique (5.1) selon l'une des revendications 10 à 12 ainsi qu'un réseau d'alimentation électrique (2), **caractérisé en ce que** l'arrangement comprend un arrangement de commutation (8) incluant au moins deux entrées de courant, une sortie de courant ainsi qu'une interface de synchronisation, la tension alternative de sortie (9.1) de l'au moins un convertisseur statique (5.1) étant reliée avec une première entrée de courant de l'arrangement de commutation (8), une tension de réseau du réseau d'alimentation électrique (2) avec une deuxième entrée de courant de l'arrangement de commutation (8) et l'interface de synchronisation de l'au moins un convertisseur statique (5.1) avec l'interface de synchronisation de l'arrangement de commutation, et l'arrangement de commutation (8) incluant des moyens de commutation pour relier, au choix, l'une des entrées de courant avec la sortie de courant en fonction d'un signal d'alimentation appliqué à l'une des entrées de courant, des moyens pour générer un signal de synchronisation ainsi que des moyens pour émettre le signal de synchronisation par le biais de l'interface de synchronisation, les moyens pour générer le signal de synchronisation étant configurés de telle sorte que le signal de synchronisation puisse aussi bien être dérivé du signal d'alimentation que généré indépendamment de celui-ci.
